(19) Europäisches Patentamt
European Patent Office
Office européen des brevets

(11) EP 3 992 238 B1

(12) EUROPEAN PATENT SPECIFICATION

(45) Date of publication and mention of the grant of the patent:
**17.09.2025 Bulletin 2025/38**

(21) Application number: **21204651.0**

(22) Date of filing: **26.10.2021**

(51) International Patent Classification (IPC):
***C08L 9/00*** *(2006.01)* ***C08K 7/02*** *(2006.01)*
***C08K 7/16*** *(2006.01)* ***C08K 7/22*** *(2006.01)*
***C08L 9/06*** *(2006.01)* ***C08L 15/00*** *(2006.01)*
***B60C 1/00*** *(2006.01)*

(52) Cooperative Patent Classification (CPC):
(C-Sets available)
**C08L 15/00; B60C 1/0016; B60C 1/0025; C08K 7/22; C08L 9/00; C08L 9/06;** B60C 1/00; C08K 3/04; C08K 3/36 (Cont.)

# (54) POLYMER COMPOSITION, CROSSLINKED PRODUCT, AND TIRE

POLYMERZUSAMMENSETZUNG, VERNETZTES PRODUKT UND REIFEN

COMPOSITION POLYMÈRE, PRODUIT RÉTICULÉ ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2020 JP 2020183168**

(43) Date of publication of application:
**04.05.2022 Bulletin 2022/18**

(73) Proprietor: **ENEOS Materials Corporation**
**Tokyo 105-7109 (JP)**

(72) Inventors:
- **KIKUCHI, Toshimitsu**
  **Tokyo, 105-8640 (JP)**
- **SENGA, Hirofumi**
  **Tokyo, 105-8640 (JP)**
- **SAKAGAMI, Yuto**
  **Tokyo, 105-8640 (JP)**
- **SANO, Takuya**
  **Tokyo, 105-8640 (JP)**
- **FUKUMOTO, Takato**
  **Tokyo, 105-8640 (JP)**
- **HAYAKAWA, Toshiyuki**
  **Tokyo, 105-8640 (JP)**

(74) Representative: **TBK**
**Bavariaring 4-6**
**80336 München (DE)**

(56) References cited:
**EP-A1- 0 940 435**
**EP-A1- 3 733 757**
**EP-A1- 3 901 210**
**WO-A1-2011/073188**
**WO-A1-2011/113731**
**WO-A1-2019/131397**
**WO-A1-2020/129356**
**US-A1- 2019 062 539**
**US-B2- 10 125 211**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 7/22, C08L 9/06**

## Description

BACKGROUND OF THE INVENTION

FIELD OF THE INVENTION

The present invention relates to a polymer composition, a crosslinked product, and a tire.

DISCUSSION OF THE BACKGROUND

A conjugated diene-based polymer **(e.g.,** styrenebutadiene copolymer) produced through polymerization of a conjugated diene compound exhibits favorable properties **(e.g.,** heat resistance, wear resistance, mechanical strength, and processability). Thus, conjugated diene-based polymers have been used in various industrial products, including pneumatic tires, vibration-proof rubbers, and hoses. There have conventionally been proposed various rubber materials used for winter tires exhibiting improved grip force on a road surface having large surface irregularities **(e.g.,** icy road surface) (see, for example, Japanese Kohyo (PCT) Patent Publication No. 2010-514867).

SUMMARY OF THE INVENTION

In the production of winter tires or all-season tires, a polymer having a relatively low glass transition temperature (Tg) is generally used for achieving favorable on-ice grip performance. Thus, vulcanized rubber produced from such a polymer tends to be soft and have insufficient wear resistance.
In view of the foregoing, a main object of the present invention is to provide a polymer composition capable of producing vulcanized rubber that achieves favorable on-ice grip performance and excellent wear resistance.
The present inventors have conducted studies for solving the aforementioned problems, and as a result have found that the problems can be solved by using a specific conjugated diene-based polymer in combination with a specific additive. The present invention provides the following means.
[1] A polymer composition comprising:

(A) a conjugated diene-based polymer having a carbon-carbon unsaturated bond and exhibiting a value $\theta$ of 0.75 or more as determined by formula (i):

$$\theta = (p + (0.5 \times r))/(p + q + (0.5 \times r) + s) \quad \text{formula (i):}$$

wherein p, q, r, and s are respectively the proportions by mole of structural units represented by formulae (1), (2), (3), and (4) in the polymer:

[F1]

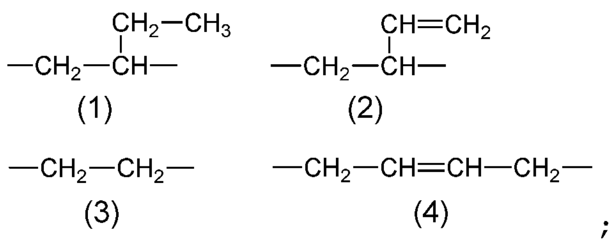
(1) (2)
(3) (4) ;

and
(B) at least one component selected from the group consisting of water-soluble particles and water-soluble fiber.

[2] A crosslinked product obtained by employing a polymer composition as described [1] above.
[3] A tire comprising a tread and a sidewall, wherein either or both of the tread and the sidewall are formed from a polymer composition as described [1] above.

The present invention can produce vulcanized rubber that achieves favorable on-ice grip performance and

excellent wear resistance.

DESCRIPTION OF THE EMBODIMENTS

<<Polymer composition>>

The polymer composition of the present invention (hereinafter may be referred to simply as "the present composition") contains the below-described components (A) and (B). Next will be described the components of the present composition, as well as components that are optionally incorporated into the composition. As used herein, the expression of two numerical values connected with "to" indicates that the numeric values before and after "to" are inclusive as the lower limit value and the upper limit value, respectively.

<(A) Conjugated diene-based polymer>

The component (A) is a conjugated diene-based polymer having a carbon-carbon unsaturated bond and exhibiting a value θ of 0.75 or more as determined by formula (i):

$$\theta = (p + (0.5 \times r))/(p + q + (0.5 \times r) + s) \qquad \text{formula (i):}$$

wherein **p, q, r,** and s are respectively the proportions by mole of structural units represented by the aforementioned formulae (1), (2), (3), and (4) in the polymer (hereinafter the conjugated diene-based polymer may be referred to "polymer (A)").

The polymer (A) may be a hydrogenation product of a polymer including a structural unit derived from a conjugated diene compound. In such a case, the polymer (A) can be produced by preparing a non-hydrogenated conjugated diene-based polymer through polymerization of a monomer including a conjugated diene compound, and then hydrogenating the resultant polymer.

The conjugated diene compound forming the polymer (A) is preferably 1,3-butadiene. The polymerization for producing the polymer (A) may involve the use of a conjugated diene compound other than 1,3-butadiene. Specific examples of the conjugated diene compound other than 1,3-butadiene include isoprene, 2,3-dimethyl-1,3-butadiene, and 1,3-pentadiene. Of these, isoprene is preferred as the conjugated diene compound other than 1,3-butadiene. For the production of the polymer (A), a single conjugated diene compound may be used, or two or more conjugated diene compounds may be used in combination.

The polymer (A) is preferably a copolymer of a conjugated diene compound and an aromatic vinyl compound, from the viewpoint of increasing the strength of a crosslinked product produced from the present composition. Examples of the aromatic vinyl compound used for the polymerization include styrene, 2-methylstyrene, 3-methylstyrene, 4-methylstyrene, α-methylstyrene, N,N-dimethylaminoethylstyrene, and diphenylethylene. The aromatic vinyl compound is particularly preferably at least one of styrene and α-methylstyrene among the above-exemplified compounds. These aromatic vinyl compounds may be used singly or in combination of two or more species.

In the case where the polymer (A) is a copolymer of a conjugated diene compound and an aromatic vinyl compound, the polymer (A) is particularly preferably a copolymer of 1,3-butadiene and styrene, in view of high living property in anionic polymerization. The polymer (A) is preferably a random copolymer in which a conjugated diene compound and an aromatic vinyl compound are irregularly distributed, from the viewpoint of improving the dispersibility of a filler to be incorporated into the polymer composition. The random copolymer of the conjugated diene compound and the aromatic vinyl compound may further have a block segment formed of the conjugated diene compound or the aromatic vinyl compound, so long as the effects of the present invention are achieved.

In the copolymer of the conjugated diene compound and the aromatic vinyl compound, the amount of a structural unit derived from the aromatic vinyl compound is preferably 3 to 45 mass% relative to the total amount of the monomers forming the copolymer, from the viewpoints of improving strength, wear resistance, low hysteresis loss property, and enhancing on-ice grip performance. The amount of the structural unit derived from the aromatic vinyl compound is more preferably 4 mass% or more, still more preferably 5 mass% or more, relative to the total amount of the monomers forming the copolymer.

In order to sufficiently enhance on-ice grip performance, the amount of the structural unit derived from the aromatic vinyl compound is more preferably 40 mass% or less, still more preferably 35 mass% or less, much more preferably 30 mass% or less, particularly preferably 25 mass% or less, relative to the total amount of the monomers forming the copolymer. When the amount of the aromatic vinyl compound-derived unit is adjusted to fall within the aforementioned range, the compatibility between productivity and strength and wear resistance can be achieved. The polymer (A) preferably contains a 1,3-butadiene unit in an amount of 50 to 97 mass%, an aromatic vinyl compound unit in an amount of 3 to 45 mass%, and a conjugated diene compound (other than 1,3-butadiene) unit in an amount of 0 to 30

mass%, relative to 100 mass% of the total amount of the monomers forming the polymer (A). These proportions are preferred in view of achieving high wear resistance of the resultant crosslinked product and a well-balanced improvement in on-ice grip performance.

The above-exemplified conjugated diene compound and aromatic vinyl compound have a similar effect in that they can produce a conjugated diene-based polymer having an active terminal. Thus, a conjugated diene compound or aromatic vinyl compound that is not described in the Examples hereinbelow can be used in the present invention.

The polymerization may employ an additional monomer compound other than the conjugated diene compound and the aromatic vinyl compound. Examples of the additional monomer include acrylonitrile, methyl (meth)acrylate, and ethyl (meth) acrylate. The amount of the structural unit derived from the additional monomer is preferably 30 mass% or less, more preferably 20 mass% or less, still more preferably 10 mass% or less, relative to the total amount of the monomers forming the polymer (A).

The method for producing the polymer (A) may be any of solution polymerization, vapor-phase polymerization, and bulk polymerization. In particular, solution polymerization is preferred. The polymerization may be performed in a batch or a continuous process. In the case where solution polymerization is performed, for example, a monomer including a conjugated diene compound is polymerized in an organic solvent in the presence of a polymerization initiator and an optional randomizer.

At least one of an alkali metal compound and an alkaline earth metal compound may be used as the polymerization initiator. The alkali metal compound and the alkaline earth metal compound may be a compound that is generally used as an initiator for anionic polymerization. Specific examples of the polymerization initiator include methyllithium, ethyllithium, n-propyllithium, n-butyllithium, sec-butyllithium, t-butyllithium, 1,4-dilithiobutane, phenyllithium, stilbenelithium, naphthyllithium, naphthylsodium, naphthylpotassium, di-n-butylmagnesium, **di-n-**hexylmagnesium, ethoxypotassium, and calcium stearate. Of these, a lithium compound is preferably used as the polymerization initiator.

The polymerization reaction may be performed in the presence of a compound prepared by mixing of at least one of the aforementioned alkali metal compound and alkaline earth metal compound with a compound having a functional group capable of interacting with silica (hereinafter the thus-prepared compound may be referred to as "modifying polymerization initiator"). The polymerization in the presence of such a modifying polymerization initiator can introduce a functional group capable of interacting with silica into a polymerization initiation terminal of the polymer (A). The introduction of a functional group capable of interacting with silica into the initiation terminal of the polymer (A) is preferred, since vulcanized rubber produced from the present composition can achieve improved low hysteresis loss property (fuel efficiency).

As used herein, the term "interaction" refers to formation of a covalent bond between molecules, or formation of intermolecular force **(e.g.,** intermolecular electromagnetic force, such as ion-dipole interaction, dipole-dipole interaction, hydrogen bond, or van der Waals force) weaker than a covalent bond. The term "functional group capable of interacting with silica" refers to a group having at least one atom capable of interacting with silica **(e.g.,** nitrogen atom, sulfur atom, phosphorus atom, oxygen atom, or silicon atom). The silicon atom of the "functional group capable of interacting with silica" is preferably a silicon atom contained in a hydrocarbyloxysilyl group.

The modifying polymerization initiator is particularly preferably a product of reaction between a lithium compound (e.g., an alkyllithium) and a nitrogen-containing compound (e.g., a secondary amine compound). Examples of the nitrogen-containing compound include dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl) piperazine, N-(tertbutyldimethylsilyl)piperazine, and 1,3-ditrimethylsilyl-1,3,5-triazinane.

In the case where the polymerization is performed in the presence of a modifying polymerization initiator, the modifying polymerization initiator may be prepared by previously mixing of an alkali metal compound or an alkaline earth metal compound with a nitrogen-containing compound, and the thus-prepared modifying polymerization initiator may be added to the polymerization system for polymerization. Alternatively, an alkali metal compound or an alkaline earth metal compound and a nitrogen-containing compound may be added to the polymerization system, and these compounds may be mixed in the polymerization system to thereby prepare a modifying polymerization initiator for polymerization.

The randomizer may be used for the purpose of, for example, adjustment of the amount of 1,2-vinyl bonds (the vinyl bond content) of the polymer obtained by the polymerization. Examples of the randomizer include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, and tetramethylethylenediamine. The randomizer may be used singly or in combination of two or more species.

The organic solvent used for polymerization may be any organic solvent that is inert to the reaction. Examples of the organic solvent include aliphatic hydrocarbons, alicyclic hydrocarbons, and aromatic hydrocarbons. In particular, the organic solvent is preferably a C3 to C8 hydrocarbon. Specific examples of the C3 to C8 hydrocarbon include n-pentane, isopentane, n-hexane, cyclohexane, propene, 1-butene, isobutene, trans-2-butene, cis-2-butene, 1-hexene, 2-hexene,

benzene, toluene, xylene, ethylbenzene, heptane, cyclopentane, methylcyclopentane, methylcyclohexane, 1-pentene, 2-pentene, and cyclohexene. These organic solvents may be used singly or in combination of two or more species.

In the case of the solution polymerization, the monomer concentration of the reaction solvent is preferably 5 to 50 mass%, more preferably 10 to 30 mass%, from the viewpoint of maintaining the balance between productivity and polymerization controllability. The polymerization reaction temperature is preferably -20°C to 150°C, more preferably 0 to 120°C, particularly preferably 20 to 100°C. The polymerization reaction is preferably performed under a pressure sufficient to maintain the monomer substantially in a liquid phase. Such a pressure can be achieved by, for example, pressurizing the reactor by use of a gas employed inert to the polymerization reaction.

The 1,2-vinyl content (vinyl content) of the conjugated diene-based polymer produced through the aforementioned polymerization is preferably 5 to 70 mol%. A vinyl content of 5 mol% or more may lead to favorable grip property, whereas a vinyl content of 70 mol% or less may lead to favorable wear resistance. From such a viewpoint, the vinyl content is more preferably 10 mol% or more, still more preferably 15 mol% or more. The vinyl content is more preferably 60 mol% or less, still more preferably 50 mol% or less. The vinyl content is measured by means of $^1$H-NMR.

The aforementioned polymerization can produce a conjugated diene-based polymer having an active terminal. For termination of the polymerization, a conjugated diene-based polymer having an active terminal may be reacted with a polymerization terminator **(e.g.,** alcohol or hydrogen) or a coupling agent. Alternatively, a conjugated diene-based polymer having an active terminal may be reacted with a compound having a functional group capable of interacting with silica (hereinafter the compound may be referred to as "terminal modifier"). The reaction between a conjugated diene-based polymer having an active terminal and a terminal modifier can produce, as the polymer (A), a modified conjugated diene-based polymer having a polymerization end terminal modified with a functional group capable of interacting with silica. The use of a polymer having a polymerization terminal provided with a functional group capable of interacting with silica as the polymer (A) is preferred in view of an improvement in low hysteresis loss property. In particular, the polymer (A) preferably has at least one functional group selected from the group consisting of an amino group, a nitrogen-containing heterocyclic group, a phosphino group, a hydroxyl group, a thiol group, and a hydrocarbyloxysilyl group. As used herein, the term "active terminal" refers to a portion (present at a molecular chain end) other than a structure derived from a monomer having a carbon-carbon double bond (more specifically refers to a metal terminal).

No particular limitation is imposed on the terminal modifier, so long as it is a compound that has a functional group capable of interacting with silica and can react with an active terminal of a conjugated diene-based polymer. In particular, the terminal modifier is preferably a compound having one atom selected from the group consisting of a nitrogen atom, a sulfur atom, a phosphorus atom, an oxygen atom, and a silicon atom, wherein active hydrogen is not bonded to the atom. The terminal modifier is particularly preferably a compound which has one or more functional groups selected from the group consisting of an amino group, a group having a carbon-nitrogen double bond, a nitrogen-containing heterocyclic group, a phosphino group, a cyclic ether group, a cyclic thioether group, a protected hydroxyl group, a protected thiol group, and a hydrocarbyloxysilyl group and which can react with a polymerization active terminal. The amino group is preferably a protected primary or secondary amino group, or a tertiary amino group.

The terminal modifier is preferably at least one species selected from the group consisting of the compounds represented by formula (5) and the compounds represented by formula (6).

[F2]

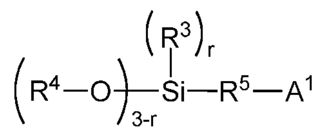

(5)

(In formula (5), $A^1$ represents a monovalent functional group which has at least one atom selected from the group consisting of nitrogen, phosphorus, oxygen, sulfur, and silicon, which does not have active hydrogen, and which is bonded to $R^5$ via a nitrogen atom, a phosphorus atom, an oxygen atom, a sulfur atom, a silicon atom, or a carbon atom contained in a carbonyl group, or a (thio)epoxy group; $R^3$ and $R^4$ each independently represent a hydrocarbyl group; $R^5$ represents a hydrocarbylene group; r is an integer of 0 to 2; when r is 2, a plurality of groups $R^3$ are identical to or different from each other; and when r is 0 or 1, a plurality of groups $R^4$ are identical to or different from one another.)

[F3]

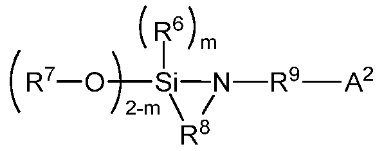 (6)

(In formula (6), $A^2$ represents a monovalent functional group which has at least one atom selected from the group consisting of nitrogen, phosphorus, oxygen, sulfur, and silicon, which does not have active hydrogen, and which is bonded to $R^9$ via a nitrogen atom, a phosphorus atom, an oxygen atom, a sulfur atom, or a silicon atom, or a C1 to C20 hydrocarbyl group; $R^6$ and $R^7$ each independently represent a hydrocarbyl group; $R^8$ represents a hydrocarbylene group; $R^9$ represents a single bond or a hydrocarbylene group; m is 0 or 1; and when m is 0, a plurality of groups $R^7$ are identical to or different from each other.)

In formulae (5) and (6), the hydrocarbyl group represented by $R^3$, $R^4$, $R^6$, $R^7$, or $A^2$ is preferably a C1 to C20 linear or branched alkyl group, a C3 to C20 cycloalkyl group, or a C6 to C20 aryl group.

The hydrocarbylene group represented by $R^5$ or $R^9$ is preferably a C1 to C20 linear or branched alkanediyl group, a C3 to C20 cycloalkylene group, or a C6 to C20 arylene group. The hydrocarbylene group represented by $R^8$ is preferably a C1 to C20 linear or branched alkanediyl group.

From the viewpoint of enhancing the reactivity of the terminal modifier to a conjugated diene-based polymer, r is preferably 0 or 1.

When $A^1$ is the aforementioned monovalent functional group, at least one atom (contained in $A^1$) selected from the group consisting of nitrogen, phosphorus, oxygen, sulfur, and silicon may be protected with a protective group (e.g., a tri-substituted hydrocarbylsilyl group). Also, when $A^2$ is the aforementioned monovalent functional group, at least one atom (contained in $A^2$) selected from the group consisting of nitrogen, phosphorus, oxygen, sulfur, and silicon may be protected with a protective group (e.g., a tri-substituted hydrocarbylsilyl group). As used herein, the term "active hydrogen" refers to a hydrogen atom bonded to an atom other than a carbon atom, preferably a hydrogen atom having a bonding energy lower than that of a carbon-hydrogen bond of polymethylene. The protective group is a functional group for converting the group $A^1$ or $A^2$ into a functional group inactive to a polymerization active terminal. The term "(thio)epoxy group" is intended to encompass an epoxy group and a thioepoxy group.

$A^1$ may be a group that can be formed into an onium ion by an onium salt generator. When the terminal modifier has such a group ($A^1$), the terminal modifier can provide the polymer (A) with superior shape-maintaining ability. Specific examples of the group $A^1$ include a nitrogen-containing group prepared through substitution of two hydrogen atoms of a primary amino group with two protective groups, a nitrogen-containing group prepared through substitution of one hydrogen atom of a secondary amino group with one protective group, a tertiary amino group, an imino group, a pyridyl group, a phosphorus-containing group prepared through substitution of two hydrogen atoms of a primary phosphino group with two protective groups, a phosphorus-containing group prepared through substitution of one hydrogen atom of a secondary phosphino group with one protective group, a tertiary phosphino group, an epoxy group, a thioepoxy group, a group prepared through substitution of the hydrogen atom of a hydroxyl group with a protective group, a sulfur-containing group prepared through substitution of the hydrogen atom of a thiol group with a protective group, and a hydrocarbyloxycarbonyl group. Of these, a nitrogen-atom-containing group is preferred, since it exhibits good affinity to silica. The group $A^1$ is more preferably a tertiary amino group or a nitrogen-containing group prepared through substitution of two hydrogen atoms of a primary amino group with two protective groups.

Specific examples of preferred terminal modifiers include compounds represented by formula (5), such as N,N-bis(trimethylsilyl)aminopropyltrimethoxysilane, N,N-bis(trimethylsilyl)aminopropylmethyldiethoxysilane, N,N',N'-tris(trimethylsilyl)-N-(2-aminoethyl)-3-aminopropyltriethoxysilane, 3-(4-trimethylsilyl-1-piperazino)propylmethyldimethoxysilane, 3-glycidoxypropylmethyldimethoxysilane, and 3-glycidoxypropyltriethoxysilane.

Specific examples of compounds represented by formula (6) include 2,2-dimethoxy-1-(3-trimethoxysilylpropyl)-1,2-azasilolidine, 2,2-diethoxy-1-(3-trimethoxysilylpropyl)-1,2-azasilolidine, 2,2-dimethoxy-1-phenyl-1,2-azasilolidine, 1-trimethylsilyl-2,2-dimethoxy-1-aza-2-silacyclopentane, 2-(2,2-dimethoxy-1,2-azasilolidin-1-yl)-N,N-diethylethan-1-amine, 2-(2,2-dimethoxy-1,2-azasilolidin-1-yl)-N,N-dimethylethan-1-amine, and 3-(2,2-dimethoxy-1,2-azasilolidin-1-yl)-N,N-diethylpropan-1-amine. The terminal modifiers may be used singly or in combination of two or more species.

The aforementioned terminal modification reaction may be, for example, a solution reaction. The solution reaction may be performed by use of a solution containing unreacted monomer after completion of polymerization reaction. Alternatively, the solution reaction may be performed through isolation of the conjugated diene-based polymer contained in the solution, and dissolution of the isolated polymer in an appropriate solvent **(e.g.,** cyclohexane). The terminal modification reaction may be performed by a batch or continuous process. No particular limitation is imposed on

the method of adding the terminal modifier. For example, the terminal modifier may be added at one time or in a divided or continuous manner.

The amount of the terminal modifier used may be appropriately determined depending on the type of the compound used in the reaction. The amount of the terminal modifier is preferably 0.1 mole equivalents or more, more preferably 0.3 mole equivalents or more, relative to the metal atom (responsible for the polymerization reaction) of the polymerization initiator. When the amount of the terminal modifier used is adjusted to 0.1 mole equivalents or more, the modification reaction can be sufficiently progressed, and the effect of improving the dispersibility of silica can be desirably achieved. The terminal modification reaction temperature is generally equal to the polymerization reaction temperature, and is preferably -20 to 150°C, more preferably 0 to 120°C, particularly preferably 20 to 100°C. An excessively low modification reaction temperature tends to lead to an increase in the viscosity of the modified conjugated diene-based polymer, whereas an excessively high modification reaction temperature promotes the inactivation of the polymerization active terminal. The terminal modification reaction time is preferably 1 minute to 5 hours, more preferably 2 minutes to 1 hour.

For the purpose of, for example, adjustment of the Mooney viscosity of the polymer (A), the conjugated diene-based polymer having an active terminal may be reacted with a coupling agent such as silicon tetrachloride or a polyfunctional epoxy compound **(e.g.,** tetraglycidyl-1,3-bisaminomethylcyclohexane) before, after, or during the modification reaction by use of the terminal modifier. The amount of the coupling agent used may be appropriately determined depending on, for example, the desired Mooney viscosity of the polymer (A) or the type of the compound used for the reaction. The amount of the coupling agent is preferably 0.01 to 0.8 mole equivalents relative to the metal atom (responsible for the polymerization reaction) of the polymerization initiator. A single coupling agent may be used, or two or more coupling agents may be used in combination.

Subsequently, the polymer (A) can be produced through hydrogenation of the above-produced modified or unmodified conjugated diene-based polymer. The hydrogenation reaction may be performed by any method under any conditions, so long as the resultant conjugated diene-based polymer exhibits a desired percent hydrogenation. Examples of the hydrogenation method include a method involving the use of a hydrogenation catalyst containing an organic titanium compound as a main component; a method involving the use of a catalyst containing an organic compound of iron, nickel, or cobalt and an organic metal compound (e.g., an alkylaluminum); a method involving the use of an organic complex of an organic metal compound of, for example, ruthenium or rhodium; and a method involving the use of a catalyst including a carrier (e.g., carbon, silica, or alumina) on which a metal (e.g., palladium, platinum, ruthenium, cobalt, or nickel) is supported. Industrially preferred is a method involving hydrogenation under mild conditions (low pressure and low temperature) by use of a homogeneous catalyst containing an organic titanium compound only, or containing an organic titanium compound and an organic compound of a metal (lithium, magnesium, or aluminum) (Japanese Kokoku Patent Publication Nos. S63-4841 and H01-37970). Such a hydrogenation method achieves high hydrogenation selectivity to a double bond of butadiene, and is suitable for the object of the present invention.

The hydrogenation of the conjugated diene-based polymer is performed in a solvent that is inert to a catalyst and can dissolve the conjugated diene-based polymer. Examples of preferred solvents include aliphatic hydrocarbons, such as n-pentane, n-hexane, and n-octane; alicyclic hydrocarbons, such as cyclohexane and cycloheptane; aromatic hydrocarbons, such as benzene and toluene; and ethers, such as diethyl ether and tetrahydrofuran. These solvents may be used singly. Alternatively, a mixture containing such a solvent as a main component may be used.

In general, the hydrogenation reaction is performed through the following procedure: the conjugated diene-based polymer is maintained at a predetermined temperature in a hydrogen or inert atmosphere, a hydrogenation catalyst is added under stirring or non-stirring, and hydrogen gas is introduced to thereby increase the pressure to a predetermined level. The term "inert atmosphere" refers to an atmosphere that causes no reaction to the participants in the hydrogenation reaction; for example, a helium, neon, or argon atmosphere. Air or oxygen is not preferred, since it causes inactivation of a catalyst through, for example, oxidation of the catalyst. Nitrogen is not also preferred, since it acts as a catalyst poison during the hydrogenation reaction to thereby reduce hydrogenation activity. Most preferably, the hydrogenation reactor is filled with a hydrogen gas atmosphere alone.

The hydrogenation reaction process for producing the hydrogenated conjugated diene-based polymer may be a batch process, a continuous process, or a mixture thereof. In the case where the hydrogenation catalyst is a titanocene diaryl compound, the compound may be added as is to the reaction mixture, or may be added in the form of a solution of the compound in an inert organic solvent. The inert organic solvent used when the catalyst is used in the form of a solution may be any solvent that does not react with the participants in the hydrogenation reaction. Preferably, the inert organic solvent is identical to the solvent used in the hydrogenation reaction. The amount of the catalyst added is 0.02 to 20 mmol relative to 100 g of the conjugated diene-based polymer before hydrogenation.

The polymer (A) exhibits a value $\theta$ of 0.75 or more as determined by formula (i).

$$\theta = (p + (0.5 \times r))/(p + q + (0.5 \times r) + s) \qquad \text{formula (i):}$$

When the value θ is 0.75 or more, the resultant crosslinked product exhibits sufficiently high wear resistance, and a change in the hardness of the product due to thermal aging can be prevented. For this reason, the value θ is preferably 0.78 or more, more preferably 0.80 or more, still more preferably 0.85 or more. From the viewpoint of sufficient crosslinking reaction, the value θ is preferably 0.99 or less, more preferably 0.97 or less.

The aforementioned formula (i) provides the percent hydrogenation of the conjugated diene-based polymer. Specifically, the value θ determined by formula (i) corresponds to the percent hydrogenation of the polymer (A). Thus, when the value θ is, for example, 0.75, the percent hydrogenation of the polymer (A) is 75%. The percent hydrogenation of the polymer can be adjusted by varying, for example, the hydrogenation reaction time. The percent hydrogenation is measured by means of $^1$H-NMR.

The polymer (A) is preferably produced through a method in which a monomer containing 1,3-butadiene is subjected to solution polymerization in the presence of an alkali metal compound, and the resultant polymer solution is subjected to terminal modification reaction and then hydrogenation reaction. This method is industrially advantageous. In this case, the polymer (A) can be isolated by removing the solvent from the above-prepared solution. The polymer can be isolated through a known solvent removal method (e.g., steam stripping) or a drying operation such as thermal treatment.

The polymer (A) has a weight average molecular weight (Mw) of preferably $1.0 \times 10^5$ to $2.0 \times 10^6$. When the Mw is $1.0 \times 10^5$ or more, the resultant crosslinked product achieves sufficiently high wear resistance and fuel efficiency. When the Mw is $2.0 \times 10^6$ or less, the present composition exhibits favorable processability, which is preferred. The Mw of the polymer (A) is more preferably $1.1 \times 10^5$ or more, still more preferably $1.2 \times 10^5$ or more. The Mw of the polymer (A) is more preferably $1.8 \times 10^6$ or less, still more preferably $1.5 \times 10^6$ or less. As used herein, the weight average molecular weight is measured through gel permeation chromatography (GPC) as reduced to polystyrene, and corresponds to the overall peak weight average molecular weight (total weight average molecular weight).

From the viewpoint of producing a crosslinked product achieving excellent on-ice grip performance, the polymer (A) has a glass transition temperature (Tg) of preferably -20°C or lower, more preferably -30°C or lower, still more preferably -40°C or lower, much more preferably -45°C or lower. The Tg of the polymer (A) is, for example, -70°C or higher. As used herein, the Tg of the polymer is measured through differential scanning calorimetry (DSC) in accordance with ASTM D3418.

The polymer (A) preferably has a low Tg from the viewpoint of producing a crosslinked product achieving excellent on-ice grip performance. In the case of the polymer (A), favorable wear resistance is achieved, but there is room for improvement in on-ice grip performance, as compared with the case of non-hydrogenated SBR having a Tg comparable to that of the polymer (A). However, the polymer composition containing the polymer (A), which has a relatively low Tg, and the component (B) (water-soluble component) can advantageously produce vulcanized rubber achieving a good balance between wear resistance and on-ice grip performance.

<(B) Water-soluble component>

The component (B) contained in the present composition is at least one species selected from the group consisting of water-soluble particles and water-soluble fiber (hereinafter the component (B) may be referred to as "water-soluble component (B)"). No particular limitation is imposed on the water-soluble component (B), so long as it can dissolve or swell in water at room temperature. The water-soluble component (B) may be, for example, a substance having a solubility in water of 1.2 g/100 g-$H_2O$ or more at 25°C.

Water-soluble particles

The water-soluble particles are, for example, water-soluble inorganic particles and organic particles. Examples of water-soluble inorganic particles include particles of chlorides, such as sodium chloride, potassium chloride, and magnesium chloride; particles of sulfates, such as sodium sulfate, potassium sulfate, and magnesium sulfate; particles of carbonates, such as sodium carbonate and sodium hydrogencarbonate; particles of phosphates, such as sodium hydrogenphosphate; and particles of hydroxides, such as sodium hydroxide and potassium hydroxide.

Examples of water-soluble organic particles include particles of lignin sulfonates, such as sodium lignin sulfonate, potassium lignin sulfonate, calcium lignin sulfonate, magnesium lignin sulfonate, and ammonium lignin sulfonate; particles of resins, such as polyvinyl alcohol or derivatives thereof (e.g., partially acetylated product, carboxylate-modified polyvinyl alcohol, and sulfonate-modified polyvinyl alcohol), alkali salts of poly(meth)acrylic acid, and alkali salts of (meth)acrylic acid/(meth)acrylic acid ester copolymer; and particles of saccharides, such as monosaccharides, oligosaccharides, and polysaccharides.

Specific examples of saccharides include monosaccharides, such as glucose, fructose, and galactose; oligosaccharides, such as sucrose, lactose, maltose, raffinose, maltotriose, trehalose, and palatinose; and polysaccharides, such as starch, dextrin, glycogen, glucan, xanthan gum, galactomannan (e.g., guar gum or fenugreek gum), cyclodextrin

(e.g., α-cyclodextrin, β-cyclodextrin, or γ-cyclodextrin), methyl cellulose, ethyl cellulose, and carboxymethyl cellulose. These types of water-soluble particles may be used singly or in combination of two or more species.

The water-soluble particles may be in various forms, such as powder, granules, or microbeads. The water-soluble particles used as the water-soluble component (B) are preferably solid water-soluble particles. From the viewpoint of sufficiently achieving the effect of improving on-ice grip performance, the water-soluble particles have a median particle size of preferably 1 μm or more, more preferably 2 μm or more. From the viewpoint of achieving a good balance between on-ice grip performance and wear resistance, the median particle size is preferably 1,000 μm or less, more preferably 500 μm or less. As used herein, the median particle size of the water-soluble particles corresponds to a median diameter (D50) and is measured through the laser diffraction and scattering method.

Water-soluble fiber

The water-soluble fiber may be water-soluble or water-swellable short fiber. Specifically, the fiber length of the water-soluble fiber is preferably 1 mm or more, more preferably 2 mm or more, still more preferably 4 mm or more, from the viewpoint of sufficiently achieving the effect of improving on-ice grip performance. The fiber length is preferably 30 mm or less, more preferably 20 mm or less, still more preferably 15 mm or less, from the viewpoint of preventing impairment of wear resistance and processability. The diameter (average diameter) of the water-soluble fiber is preferably 5 μm or more, more preferably 10 μm or more. The average diameter of the water-soluble fiber is preferably 50 μm or less, more preferably 30 μm or less, still more preferably 20 μm or less.

The water-soluble fiber is, for example, fiber containing, as a main component, any of the materials exemplified above in the description of the water-soluble organic particles. In particular, the water-soluble fiber is preferably at least one species selected from the group consisting of polyvinyl alcohol fiber and polysaccharide fiber. These water-soluble fibers may be used singly or in combination of two or more species.

No particular limitation is imposed on the amount of the water-soluble component (B) contained in the present composition, so long as the effects of the present invention are achieved. The amount of the water-soluble component (B) is preferably 0.1 parts by mass or more and 40 parts by mass or less relative to 100 parts by mass of the polymer (A). When the amount of the water-soluble component (B) is adjusted to fall within the aforementioned range, the resultant vulcanized rubber exhibits wear resistance and achieves favorable on-ice grip performance, which is preferred. From such a viewpoint, the amount of the water-soluble component (B) is more preferably 0.5 parts by mass or more, still more preferably 1 part by mass or more, relative to 100 parts by mass of the polymer (A). From the viewpoint of preventing impairment of the wear resistance of the resultant crosslinked product, the amount of the water-soluble component (B) is preferably 30 parts by mass or less, more preferably 25 parts by mass or less, still more preferably 20 parts by mass or less, yet more preferably 10 parts by mass or less, relative to 100 parts by mass of the polymer (A).

When the water-soluble component (B) is incorporated into the polymer composition for producing vulcanized rubber (hereinafter the composition may be referred to as "rubber composition"), and a pneumatic tire is produced from the composition, surface irregularities are formed on a surface (which comes into contact with water) of the vulcanized rubber because of dissolution of the water-soluble component (B) in water, resulting in an improvement in on-ice grip performance. However, incorporation of the water-soluble component (B) into the rubber composition may cause considerable impairment of the wear resistance of the resultant vulcanized rubber. Also, in general, the rubber composition tends to harden by time degradation, leading to impairment of grip performance. In contrast, the present composition containing the polymer (A) and the water-soluble component (B) can produce vulcanized rubber achieving a good balance between wear resistance and on-ice grip performance. The present composition is suitably used for the production of winter tires or all-season tires.

<Additional components>

The present composition may further contain a component described below in addition to the polymer (A) and the water-soluble component (B).

Porous particles

The present composition may further contain porous particles (hereinafter may be referred to as "porous particles (C) "). Incorporation of the porous particles into the present composition can achieve an improvement in on-ice frictional force. Thus, the present composition containing the water-soluble component (B) and the porous particles (C) is particularly suitably used for the production of winter tires or all-season tires. The water-soluble component (B) differs from the porous particles (C) in that it does not have a porous structure.

Examples of the porous particles (C) include water-soluble or water-insoluble inorganic particles and organic particles. No particular limitation is imposed on the inorganic particles, so long as they have a porous structure. In

particular, the inorganic particles are preferably metal oxide particles, more preferably porous metal oxide particles containing, as a metal atom, at least one species selected from the group consisting of aluminum, silicon, and titanium. Specific examples of the metal oxide forming such porous particles include aluminum oxide (alumina), aluminum hydroxide, silicon dioxide, silicon hydroxide, aluminosilicates (e.g., sodium aluminosilicate, potassium aluminosilicate, and calcium aluminosilicate), and titanium oxide. The porous particles used are preferably porous particles formed of at least one species selected from the group consisting of aluminosilicates and glass.

The organic particles are preferably at least one species selected from the group consisting of porous resin particles and porous polysaccharide particles. Examples of the material forming the porous resin particles include polyamides (e.g., nylon 6, nylon 6,6, nylon 11, nylon 12, and nylon 66), polyether, polyester, olefinic polymers (e.g., polyethylene, polypropylene, polystyrene, and ethylene-vinyl acetate copolymer), (meth)acrylic polymers, and vinyl polymers (e.g., polyvinyl chloride and polyvinyl acetate). Examples of the polysaccharide forming the porous polysaccharide particles include polysaccharides exemplified above in the description of the water-soluble organic particles, and water-insoluble polysaccharides such as cellulose and chitin. In particular, the usable porous organic particles are preferably, for example, porous polyamide particles, porous (meth)acrylic polymer particles, porous cellulose particles, or porous chitin particles.

No particular limitation is imposed on the particle size of the porous particles (C). From the viewpoint of sufficiently achieving the effect of improving on-ice grip performance, the porous particles (C) have a median particle size of preferably 1 μm or more, more preferably 5 μm or more. From the viewpoint of preventing impairment of the strength and wear resistance of the resultant vulcanized rubber, the median particle size of the porous particles (C) is preferably 2,000 μm or less, more preferably 1,000 μm or less. As used herein, the median particle size of the porous particles (C) corresponds to median diameter (D50) and is measured through the laser diffraction and scattering method.

No particular limitation is imposed on the amount of the porous particles (C) contained in the present composition, so long as the effects of the present invention are achieved. The amount of the porous particles (C) is preferably 0.5 parts by mass or more and 40 parts by mass or less relative to 100 parts by mass of the polymer (A). When the amount of the porous particles (C) is adjusted to fall within the aforementioned range, on-ice grip performance can be sufficiently improved while strength and wear resistance are maintained at favorable levels, which is preferred. From such a viewpoint, the amount of the porous particles (C) is more preferably 1 part by mass or more, still more preferably 2 parts by mass or more, relative to 100 parts by mass of the polymer (A). From the viewpoint of preventing impairment of the strength and wear resistance of the resultant crosslinked product, the amount of the porous particles (C) is preferably 30 parts by mass or less, more preferably 25 parts by mass or less, relative to 100 parts by mass of the polymer (A).

Additional rubber components

The present composition may contain only the polymer (A) as a rubber component. However, the present composition may contain, in addition to the polymer (A), a rubber component different from the polymer (A) (hereinafter may be referred to as "additional rubber component"), so long as the effects of the present invention are not impaired. Examples of the type of such an additional rubber component include, but are not particularly limited to, styrene butadiene rubber (SBR), butadiene rubber (BR, such as high cis BR having a cis-1,4 bond content of 90% or more, or BR containing syndiotactic-1,2-polybutadiene (SPB)), isoprene rubber (IR), styrene-isoprene copolymer rubber, butadiene-isoprene copolymer rubber, natural rubber (NR), and halogenated rubber. The additional rubber component is more preferably SBR, BR, or NR. The amount of the additional rubber component is preferably 60 mass% or less, more preferably 40 mass% or less, relative to the total amount of the rubber components (the polymer (A) and the additional rubber component) contained in the polymer composition.

As used herein, the "rubber component" contained in the polymer composition refers to a polymer capable of producing a cured product exhibiting rubber elasticity through thermal curing. The cured product is characterized in that it undergoes large deformation with a small force at room temperature **(e.g.,** elongation by a factor of 2 or more at room temperature) and quickly returns to its virtually original shape when the force is removed.

Silica, etc.

The present composition preferably contains at least one species selected from the group consisting of silica and carbon black (hereinafter may be referred to as "silica, etc."). Silica is preferred, since it achieves favorable static/dynamic ratio and low hysteresis loss property. Carbon black is preferred, since it exhibits a high effect of improving the strength of the polymer composition and vulcanized rubber. Examples of the silica include wet silica (hydrated silica), dry silica (silicic anhydride), and colloidal silica. Of these, wet silica is preferred. Examples of the carbon black include furnace black, acetylene black, thermal black, channel black, and graphite. Of these, furnace black is preferred.

In the present composition, the total amount of silica and carbon black is preferably 40 to 150 parts by mass relative to 100 parts by mass of the rubber components contained in the polymer composition. The amount of silica, etc. is

preferably 40 parts by mass or more, since the effect of improving the strength of the resultant vulcanized rubber can be sufficiently achieved. Meanwhile, the amount of silica, etc. is preferably 150 parts by mass or less, since the wear resistance of the vulcanized rubber can be sufficiently secured. The amount of silica, etc. is preferably 50 parts by mass or more, more preferably 55 parts by mass or more, relative to 100 parts by mass of the total amount of the rubber components. Meanwhile, the amount of silica, etc. is preferably 150 parts by mass or less, more preferably 140 parts by mass or less, relative to 100 parts by mass of the total amount of the rubber components.

Crosslinking agent

The present composition preferably contains a crosslinking agent. No particular limitation is imposed on the type of the crosslinking agent to be used. Specific examples of the crosslinking agent include organic peroxides, phenolic resins, sulfur, sulfur compounds, p-quinone, p-quinone dioxime derivatives, bismaleimide compounds, epoxy compounds, silane compounds, amino resins, polyols, polyamines, triazine compounds, and metal soaps. The crosslinking agent to be used is preferably at least one species selected from the group consisting of organic peroxides, phenolic resins, and sulfur. These crosslinking agents may be used singly or in combination of two or more species.

Examples of the organic peroxide include 1,3-bis(t-butylperoxyisopropyl) benzene, 2,5-dimethyl-2,5-bis(t-butylperoxy)hexyne-3, 2,5-dimethyl-2,5-bis(t-butylperoxy)hexene-3, 2,5-dimethyl-2,5-bis(t-butylperoxy) hexane, 2,2'-bis(t-butylperoxy)-p-isopropylbenzene, dicumyl peroxide, di-t-butyl peroxide, and t-butyl peroxide.

Examples of the phenolic resin include p-substituted phenolic compounds represented by formula (7), o-substituted phenol-aldehyde condensates, m-substituted phenol-aldehyde condensates, and brominated alkylphenol-aldehyde condensates. Of these, p-substituted phenolic compounds are preferred. Such a p-substituted phenolic compound can be prepared through condensation reaction between p-substituted phenol and an aldehyde (preferably formaldehyde) in the presence of an alkali catalyst.

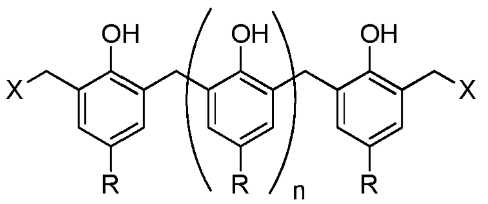

(7)

(In formula (7), X represents a hydroxyl group, a halogenated alkyl group, or a halogen atom; R represents a C1 to C15 monovalent saturated hydrocarbon group; and n is an integer of 0 to 10.)

Examples of commercially available phenolic resins include product name "Tackirol 201" (alkylphenol-formaldehyde resin, manufactured by Taoka Chemical Company, Limited), product name "Tackirol 250-I" (brominated alkylphenol-formaldehyde resin (percent bromination: 4%), manufactured by Taoka Chemical Company, Limited), product name "Tackirol 250-III" (brominated alkylphenol-formaldehyde resin, manufactured by Taoka Chemical Company, Limited), product name "PR-4507" (manufactured by Gun Ei Chemical Industry Co., Ltd.), product name "ST137X" (manufactured by Rohm & Haas Company), product name "Sumilite Resin PR-22193" (manufactured by Sumitomo Durez Co., Ltd.), product name "Tamanol 531" (manufactured by Arakawa Chemical Industries, Ltd.), product name "SP1059," product name "SP1045," product name "SP1055," and product name "SP1056" (manufactured by Schenectady), and product name "CRM-0803" (manufactured by Showa Union Gosei Co., Ltd.). Of these, "Tackirol 201" is preferably used.

The amount of the crosslinking agent is preferably 0.01 to 20 parts by mass, more preferably 0.1 to 15 parts by mass, still more preferably 0.5 to 10 parts by mass, relative to 100 parts by mass of the total amount of the rubber components contained in the polymer composition.

Resin component

The present composition may further contain a resin component together with the rubber component. Examples of the type of the resin component include, but are not particularly limited to, polyolefin resins, such as polyethylene and polypropylene. When the present composition contains a resin component, the amount of the resin component is preferably 1 to 50 parts by mass, more preferably 5 to 40 parts by mass, relative to 100 parts by mass of the total amount of the rubber components contained in the polymer composition.

The present composition may contain, in addition to the aforementioned components, any additive that is commonly used in a rubber composition for producing vulcanized rubber for various applications, such as tires, hoses, vibration-proof products, and belts. Examples of the additive include an antioxidant, zinc oxide, stearic acid, a softener, sulfur, and a vulcanization accelerator. The amount of such an additive incorporated into the polymer composition may be

appropriately determined depending on the type of the additive, so long as the effects of the present invention are not impaired.

<<Crosslinked product and tire>>

The crosslinked product of the present invention can be produced through crosslinking treatment of the aforementioned polymer composition. When the crosslinked product is a rubber molded product, generally, the polymer composition is formed into a predetermined shape and then subjected to crosslinking treatment. The rubber molded product can be produced through a customary method. For example, in the production of a tire, the aforementioned polymer composition is mixed by means of a mixing machine such as a roll or a mixer and then formed into a predetermined shape, and the resultant product is placed at a predetermined position and then subjected to vulcanization molding through a customary method, to thereby form either or both of a tread and a sidewall. A pneumatic tire is thereby produced.

The vulcanized rubber, which is the crosslinked product of the present invention, exhibits excellent mechanical strength, and thus can be used in various rubber molded products. Specifically, the vulcanized rubber may be used for the following applications: materials for treads or sidewalls of tires; rolls or vibration-proof rubbers for industrial machines and facilities; hoses and hose covers, such as diaphragm, radiator hose, and air hose; sealing materials, such as packing, gasket, weather strip, O-ring, and oil seal; belts, such as belts for power transmission; and materials for linings, dust boots, wire harnesses, and shoe soles. In particular, the vulcanized rubber is preferably used as a tire member, a vibration-proof member, a belt member, a roll member, a hose member, a wire harness member, and a shoe sole member, and is more preferably used as a tire member, a vibration-proof member, a roll member, and a belt member.

The crosslinked product of the present invention exhibits high wear resistance and achieves superior on-ice grip performance. Thus, the crosslinked product is particularly suitable for use as a tire member; in particular a winter tire or an all-season tire. The crosslinked product is particularly suitable for use as a material of either or both of a tire tread and a tire sidewall.

EXAMPLES

The present invention will next be described in detail by way of examples, which should not be construed as limiting the invention thereto. Unless otherwise specified, the units "part(s)" and "%" described in the Examples and Comparative Examples refer to "part(s) by mass" and "mass%," respectively. Physical property determination methods are described below.

[Bonded styrene content (mass%)]: determined by means of $^1$H-NMR (400 MHz).
[Vinyl content (mol%)]: determined by means of $^1$H-NMR (400 MHz) .
[Percent hydrogenation (%)] and [$\theta$]: determined by means of $^1$H-NMR (500 MHz).
[1st peak weight average molecular weight]: determined (in terms of polystyrene) on the basis of the retention time corresponding to the top of the maximum peak of a GPC curve obtained by means of a gel permeation chromatography (GPC) apparatus (HLC-8120GPC (product name, manufactured by Tosoh Corporation)).
(GPC conditions)

Column: product name "GMHXL" (manufactured by Tosoh Corporation), two columns
Column temperature: 40°C
Mobile phase: tetrahydrofuran
Flow rate: 1.0 mL/minute
Sample concentration: 10 mg/20 mL

[Total weight average molecular weight]: determined (in terms of polystyrene) from a GPC curve obtained by means of a GPC apparatus (HLC-8120GPC (product name, manufactured by Tosoh Corporation)) under the aforementioned GPC conditions.
[Glass transition temperature Tg (°C)]: measured through differential scanning calorimetry (DSC) according to ASTM D3418.

<Production of hydrogenation catalyst>

[Synthesis of catalyst E]

A three-necked flask (volume: 1 L) equipped with a stirrer and a dropping funnel was purged with dry nitrogen, and

anhydrous tetrahydrofuran (200 mL) and tetrahydrofurfuryl alcohol (0.2 mol) were added to the flask. Thereafter, n-butyllithium/cyclohexane solution (0.2 mol) was added dropwise to the three-necked flask at 15°C to allow reaction to proceed, to thereby prepare a tetrahydrofuran solution of tetrahydrofurfuryloxylithium.

Subsequently, a three-necked flask (volume: 1 L) equipped with a stirrer and a dropping funnel was purged with dry nitrogen, and bis(η5-cyclopentadienyl)titanium dichloride (49.8 g, 0.2 mol) and anhydrous tetrahydrofuran (250 mL) were added to the flask. The tetrahydrofuran solution of tetrahydrofurfuryloxylithium prepared as described above was added dropwise to the flask under stirring at room temperature over about 1 hour. After the elapse of about 2 hours, a red-brown liquid was subjected to filtration, and insoluble matter was washed with dichloromethane.

Thereafter, the filtrate was mixed with the washing, and the solvent was removed under reduced pressure, to thereby produce a catalyst E [bis(η-5-cyclopentadienyl)titanium (tetrahydrofurfuryloxy)chloride] (hereinafter may be referred to as "[chlorobis(2,4-cyclopentadienyl)titanium(IV) tetrahydrofurfurylalkoxide]"). The yield of the catalyst was 95%.

<Production of conjugated diene-based polymer>

[Production Example 1: Synthesis of conjugated diene-based polymer A-1]

Cyclohexane (25,900 g), tetrahydrofuran (26 g), styrene (1,273 g), and 1,3-butadiene (2,361 g) were added to an autoclave reactor (inner volume: 50 L) purged with nitrogen. The temperature of the mixture contained in the reactor was adjusted to 45°C, and then a cyclohexane solution containing n-butyllithium (39 mmol) was added to the reactor for initiation of polymerization. The polymerization was performed under adiabatic conditions, and the maximum temperature reached 80°C.

After confirmation that the polymerization conversion reached 99%, butadiene (additional butadiene) (111 g) was added, and the polymerization was further allowed to proceed for 5 minutes, to thereby yield a polymer-containing reaction mixture. Silicon tetrachloride (2 mmol) was added to the resultant reaction mixture, and reaction was allowed to proceed for 10 minutes. Subsequently, N,N-dimethyl-3-(triethoxysilyl)propylamine (28 mmol) was added to the mixture, and reaction was allowed to proceed for 20 minutes.

Next, the reaction mixture was heated to 80°C or higher, and hydrogen was introduced into the reaction system. Thereafter, diethylaluminum chloride (3.2 g), the catalyst E (2.4 g), and n-butyllithium (15 mmol) were added to the mixture, and hydrogen was supplied to achieve a predetermined hydrogen integration value while the hydrogen pressure was maintained at 0.7 MPa or more, to thereby allow reaction to proceed. Thereafter, the temperature and pressure of the reaction mixture were returned to ambient temperature and pressure, and then the mixture was removed from the reaction container, to thereby yield a polymer solution.

To the resultant polymer solution containing a hydrogenated conjugated diene-based copolymer was added 2,6-di-tert-butyl-p-cresol (1.4 g). Subsequently, an aqueous solution (temperature: 80°C) having a pH of 8.5 (at 80°C as measured through the glass electrode method) adjusted with ammonia serving as a pH adjuster was added to a solvent removal bath, and the aforementioned polymer solution was added thereto (the amount of the polymer solution was 100 parts by mass relative to 1,000 parts by mass of the aqueous solution). The temperature of the liquid phase in the solvent removal bath was adjusted to 95°C, and the solvent was removed through steam stripping (steam temperature: 190°C) for 2 hours. The resultant product was dried by means of a heating roll whose temperature was adjusted to 110°C, to thereby produce a conjugated diene-based polymer A-1. Table 2 shows the analytical values of the conjugated diene-based polymer A-1. The conjugated diene-based polymer A-1 was found to have a 1st peak weight average molecular weight of $20 \times 10^4$, a weight average molecular weight (total weight average molecular weight) of $34 \times 10^4$, a percent hydrogenation of 93% ($\theta$ = 0.93), and a glass transition temperature of -34°C.

[Production Examples 2 to 7 and 9: Synthesis of conjugated diene-based polymers A-2 to A-7 and A-9]

The polymerization was performed in the same manner as employed in Production Example 1, except that materials used were varied as shown in Table 1, and the hydrogenation time was varied, to thereby produce conjugated diene-based polymers A-2 to A-7 and A-9. Table 2 shows the analytical values of the conjugated diene-based polymers A-2 to A-7 and A-9.

[Production Example 8: Synthesis of conjugated diene-based polymer A-8]

Cyclohexane (25,900 g), tetrahydrofuran (26 g), styrene (1,273 g), and 1,3-butadiene (2,361 g) were added to an autoclave reactor (inner volume: 50 L) purged with nitrogen. The temperature of the mixture contained in the reactor was adjusted to 45°C, and then a cyclohexane solution containing n-butyllithium (39 mmol) was added to the reactor for initiation of polymerization. The polymerization was performed under adiabatic conditions, and the maximum temperature

reached 80°C.

After confirmation that the polymerization conversion reached 99%, butadiene (additional butadiene) (111 g) was added, and the polymerization was further allowed to proceed for 5 minutes, to thereby yield a polymer-containing reaction mixture. Silicon tetrachloride (2 mmol) was added to the resultant reaction mixture, and reaction was allowed to proceed for 10 minutes. Subsequently, N,N-dimethyl-3-(triethoxysilyl)propylamine (28 mmol) was added to the mixture, and reaction was allowed to proceed for 20 minutes. Next, the reaction mixture was heated to 80°C or higher, and hydrogen was introduced into the reaction system. Thereafter, the temperature and pressure of the reaction mixture were returned to ambient temperature and pressure, and then the mixture was removed from the reaction container, to thereby yield a polymer solution.

To the resultant polymer solution containing a conjugated diene-based copolymer was added 2,6-di-tert-butyl-p-cresol (1.4 g). Subsequently, an aqueous solution (temperature: 80°C) having a pH of 8.5 (at 80°C as measured through the glass electrode method) adjusted with ammonia serving as a pH adjuster was added to a solvent removal bath, and the aforementioned polymer solution was added thereto (the amount of the polymer solution was 100 parts by mass relative to 1,000 parts by mass of the aqueous solution). The temperature of the liquid phase in the solvent removal bath was adjusted to 95°C, and the solvent was removed through steam stripping (steam temperature: 190°C) for 2 hours. The resultant product was dried by means of a heating roll whose temperature was adjusted to 110°C, to thereby produce a conjugated diene-based polymer A-8. The conjugated diene-based polymer A-8 was found to have a 1st peak weight average molecular weight of $20 \times 10^4$, a weight average molecular weight (total weight average molecular weight) of $34 \times 10^4$, and a glass transition temperature of -40°C. In the conjugated diene-based polymer A-8, the percent hydrogenation was 0% ($\theta$ = 0).

[Table 1]

| | | Production Example 1 | Production Example 2 | Production Example 3 | Production Example 4 | Production Example 5 | Production Example 6 | Production Example 7 | Production Example 8 | Production Example 9 |
|---|---|---|---|---|---|---|---|---|---|---|
| Type of polymer | | A-1 | A-2 | A-3 | A-4 | A-5 | A-6 | A-7 | A-8 | A-9 |
| Polymerization formulation | | | | | | | | | | |
| Solvent | | | | | | | | | | |
| :Cyclohexane | (g) | 25900 | 25900 | 25900 | 25900 | 25900 | 25900 | 25900 | 25900 | 25900 |
| Vinyl-content adjusting agent | | | | | | | | | | |
| :Tetrahydrofuran | (g) | 26 | 67 | 67 | 28 | 64 | 18 | 180 | 26 | 26 |
| Monomer | | | | | | | | | | |
| :Styrene | (g) | 1273 | 740 | 370 | 370 | 740 | 370 | 1490 | 1273 | 1273 |
| :Butadiene | (g) | 2361 | 2894 | 3264 | 3264 | 2894 | 3264 | 2144 | 2361 | 2361 |
| :Additional butadiene | (g) | 111 | 111 | 111 | 111 | 111 | 111 | 111 | 111 | 111 |
| Polymerization initiator | | | | | | | | | | |
| :n-butyllithium | (mmol) | 39 | 39 | 39 | 39 | 39 | 39 | 39 | 39 | 39 |
| :Compound A | (mmol) | - | - | 27 | - | - | - | - | - | - |
| Terminal modifier | | | | | | | | | | |
| :Compound B | (mmol) | 28 | 28 | 28 | 28 | 28 | 28 | 28 | 28 | 28 |
| Coupling agent | | | | | | | | | | |
| :Compound C | (mmol) | 2 | 2 | 2 | 2 | 2 | 2 | 2 | 2 | 2 |

The abbreviations of compounds shown in Table 1 have the following meanings.

Compound A: piperidine
Compound B: N,N-dimethyl-3-(triethoxysilyl)propylamine
Compound C: silicon tetrachloride

In Table 1, the symbol "-" refers to the case where the corresponding compound was not used.

[Table 2]

| | Production Example 1 | Production Example 2 | Production Example 3 | Production Example 4 | Production Example 5 | Production Example 6 | Production Example 7 | Production Example 8 | Production Example 9 |
|---|---|---|---|---|---|---|---|---|---|
| Type of polymer | A-1 | A-2 | A-3 | A-4 | A-5 | A-6 | A-7 | A-8 | A-9 |
| Bonded styrene content (wt%) | 34 | 20 | 10 | 10 | 20 | 10 | 40 | 34 | 34 |
| Vinyl content (mol%) | 27 | 35 | 35 | 30 | 33 | 24 | 48 | 27 | 27 |
| Percent hydrogenation (%) | 93 | 95 | 92 | 88 | 89 | 87 | 87 | 0 | 60 |
| θ | 0.93 | 0.95 | 0.92 | 0.88 | 0.89 | 0.87 | 0.87 | 0 | 0.60 |
| 1st peak weight average molecular weight ($\times 10^4$) | 20 | 21 | 22 | 20 | 21 | 20 | 19 | 20 | 20 |
| Total weight average molecular weight ($\times 10^4$) | 34 | 32 | 38 | 30 | 32 | 30 | 28 | 34 | 37 |
| Glass transition temperature (°C) | -34 | -46 | -52 | -52 | -45 | -48 | -28 | -40 | -33 |

<Production and property evaluation of polymer composition>

[Examples 1 to 19 and Comparative Examples 1 to 4]

In a first kneading step, a conjugated diene-based polymer, a water-soluble component (B), porous particles (C), silica, carbon black, a silane coupling agent, an extender oil, stearic acid, zinc oxide, and an antioxidant (according to the formulation shown in Tables 3 and 4) were kneaded by means of Plastomill (inner volume: 250 cc) equipped with a temperature controller under the following conditions: filling rate: 72%, rotation speed: 60 rpm. Subsequently, in a second kneading step, the above-prepared mixture was cooled to room temperature, and then sulfur and a vulcanization accelerator were added and kneaded. The resultant mixture was molded and vulcanized by means of a vulcanizing press at 160°C for a predetermined period of time.

The polymer composition, unvulcanized rubber, and vulcanized rubber were evaluated for the following properties (1) to (3). The types and amounts of the conjugated diene-based polymer, water-soluble component (B), and porous particles (C) used in each of the Examples and the Comparative Examples are as shown in Tables 3 and 4. Numerical values shown in Tables 3 and 4 are the amounts (parts by mass) of components. In Comparative Examples 1 and 2, the water-soluble component (B) was not incorporated. The porous particles (C) were incorporated in Examples 16 to 19.

<<Property evaluation>>

(1) Wear resistance

The vulcanized rubber was used as a sample for analysis. The wear resistance of the sample was determined by means of a DIN wear tester (manufactured by Toyo Seiki Seisaku-sho, Ltd.) according to JIS K 6264-2:2005 (load: 10 N, 25°C). A determined value is represented by an index relative to that (taken as 100) of the vulcanized rubber of Comparative Example 2. A larger value indicates better wear resistance.

(2) On-ice grip performance

The vulcanized rubber sample (diameter: 50 mm, thickness: 10 mm) was pressed against fixed ice and rotated. The frictional force during rotation was detected by means of a load cell, and the dynamic friction coefficient $\mu$ was calculated under the following conditions: measurement temperature: -2°C, surface pressure: 12 kgf/cm$^2$, rotational circumferential speed of sample: 20 cm/sec. The dynamic friction coefficient $\mu$ is represented by an index relative to that (taken as 100) of the sample of Comparative Example 2. A larger value indicates a higher dynamic friction coefficient $\mu$; i.e., better on-ice performance.

(3) Hardness (Duro-A hardness)

The hardness (Duro-A hardness) of a test piece formed of each vulcanized rubber sheet was measured according to JIS K6253 before and after thermal aging. The hardness was evaluated on a three-grade scale. Specifically, rating "A" was given to a test piece exhibiting a difference in hardness between before and after thermal aging of less than 3; rating "B" was given to a test piece exhibiting a difference in hardness between before and after thermal aging of 3 or more and less than 6; and rating "C" was given to a test piece exhibiting a difference in hardness between before and after thermal aging of 6 or more. As used herein, the term "thermal aging" refers to a process for performing thermal aging (100°C, 70 hours) of fresh vulcanized rubber according to JIS K6257:2010, to thereby yield thermal-aged vulcanized rubber.

Tables 3 and 4 show the results of property evaluations of Examples 1 to 19 and Comparative Examples 1 to 4.

[Table 3]

| | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Compounding formulation | Conjugated diene-based polymer | A-1 (100) | A-2 (100) | A-3 (100) | A-4 (100) | A-5 (100) | A-6 (100) | A-7 (100) | A-4 (100) | A-4 (100) | A-4 (100) | A-4 (100) | A-4 (100) |
| | Water-soluble component (B) | B-1 (5) | B-1 (5) | B-1 (5) | B-1 (5) | B-1 (5) | B-1 (5) | B-1 (5) | B-2 (5) | B-3 (5) | B-4 (5) | B-5 (5) | B-6 (5) |
| | Porous particles (C) | - | - | - | - | - | - | - | - | - | - | - | - |
| | Silica *1) | 50 | 50 | 50 | 50 | 50 | 50 | 50 | 50 | 50 | 50 | 50 | 50 |
| | Carbon black *2) | 10 | 10 | 10 | 10 | 10 | 10 | 10 | 10 | 10 | 10 | 10 | 10 |
| | Silane coupling agent *3) | 3.0 | 3.0 | 3.0 | 3.0 | 3.0 | 3.0 | 3.0 | 3.0 | 3.0 | 3.0 | 3.0 | 3.0 |
| | Extender oil *4) | 20 | 20 | 20 | 20 | 20 | 20 | 20 | 20 | 20 | 20 | 20 | 20 |
| | Stearic acid | 2.0 | 2.0 | 2.0 | 2.0 | 2.0 | 2.0 | 2.0 | 2.0 | 2.0 | 2.0 | 2.0 | 2.0 |
| | Zinc oxide | 3.0 | 3.0 | 3.0 | 3.0 | 3.0 | 3.0 | 3.0 | 3.0 | 3.0 | 3.0 | 3.0 | 3.0 |
| | Antioxidant *5) | 1.0 | 1.0 | 1.0 | 1.0 | 1.0 | 1.0 | 1.0 | 1.0 | 1.0 | 1.0 | 1.0 | 1.0 |
| | Vulcanization accelerator CZ *6) | 1.8 | 1.8 | 1.8 | 1.8 | 1.8 | 1.8 | 1.8 | 1.8 | 1.8 | 1.8 | 1.8 | 1.8 |
| | Vulcanization accelerator D *7) | 1.5 | 1.5 | 1.5 | 1.5 | 1.5 | 1.5 | 1.5 | 1.5 | 1.5 | 1.5 | 1.5 | 1.5 |
| | Sulfur | 1.5 | 1.5 | 1.5 | 1.5 | 1.5 | 1.5 | 1.5 | 1.5 | 1.5 | 1.5 | 1.5 | 1.5 |
| Evaluation | Wear resistance | 125 | 113 | 112 | 108 | 112 | 107 | 105 | 106 | 103 | 108 | 103 | 106 |
| | On-ice grip performance | 105 | 112 | 116 | 121 | 115 | 117 | 98 | 118 | 117 | 109 | 108 | 118 |
| | Δ hardness | A | A | A | A | A | A | A | A | A | A | A | A |

[Table 4]

| | | Example 13 | Example 14 | Example 15 | Example 16 | Example 17 | Example 18 | Example 19 | Comparative Example 1 | Comparative Example 2 | Comparative Example 3 | Comparative Example 4 |
|---|---|---|---|---|---|---|---|---|---|---|---|---|
| Compounding formulation | Conjugated diene-based polymer | A-4 (100) | A-4 (100) | A-4 (100) | A-4 (100) | A-4 (100) | A-4 (100) | A-4 (100) | A-4 (100) | A-8 (100) | A-8 (100) | A-9 (100) |
| | Water-soluble component (B) | B-7 (5) | B-1 (30) | B-1 (0.5) | B-1 (5) | B-1 (5) | B-1 (5) | B-1 (5) | - | - | B-1 (5) | B-1 (5) |
| | Porous particles (C) | - | - | - | C-1 (10) | C-2 (10) | C-3 (10) | C-4 (10) | - | - | - | - |
| | Silica *1) | 50 | 50 | 50 | 50 | 50 | 50 | 50 | 50 | 50 | 50 | 50 |
| | Carbon black *2) | 10 | 10 | 10 | 10 | 10 | 10 | 10 | 10 | 10 | 10 | 10 |
| | Silane coupling agent *3) | 3.0 | 3.0 | 3.0 | 3.0 | 3.0 | 3.0 | 3.0 | 3.0 | 3.0 | 3.0 | 3.0 |
| | Extender oil *4) | 20 | 20 | 20 | 20 | 20 | 20 | 20 | 20 | 20 | 20 | 20 |
| | Stearic acid | 2.0 | 2.0 | 2.0 | 2.0 | 2.0 | 2.0 | 2.0 | 2.0 | 2.0 | 2.0 | 2.0 |
| | Zinc oxide | 3.0 | 3.0 | 3.0 | 3.0 | 3.0 | 3.0 | 3.0 | 3.0 | 3.0 | 3.0 | 3.0 |
| | Antioxidant *5) | 1.0 | 1.0 | 1.0 | 1.0 | 1.0 | 1.0 | 1.0 | 1.0 | 1.0 | 1.0 | 1.0 |
| | Vulcanization accelerator CZ *6) | 1.8 | 1.8 | 1.8 | 1.8 | 1.8 | 1.8 | 1.8 | 1.8 | 1.8 | 1.8 | 1.8 |
| | Vulcanization accelerator D *7) | 1.5 | 1.5 | 1.5 | 1.5 | 1.5 | 1.5 | 1.5 | 1.5 | 1.5 | 1.5 | 1.5 |
| | Sulfur | 1.5 | 1.5 | 1.5 | 1.5 | 1.5 | 1.5 | 1.5 | 1.5 | 1.5 | 1.5 | 1.5 |
| Evaluation | Wear resistance | 110 | 98 | 138 | 103 | 105 | 103 | 106 | 143 | 100 | 73 | 85 |
| | On-ice grip performance | 111 | 145 | 99 | 123 | 125 | 128 | 131 | 89 | 100 | 121 | 116 |
| | Δ hardness | A | A | A | A | A | A | A | A | C | C | B |

Details of the water-soluble component (B) and the porous particles (C) shown in Tables 3 and 4 are as follows.

B-1: magnesium sulfate, product name "MN-00," manufactured by Umai Chemical Co., Ltd.
B-2: potassium sulfate, product name "KSO," manufactured by UENO FINE CHEMICALS INDUSTRY LTD.
B-3: sodium lignin sulfonate, manufactured by Tokyo Chemical Industry Co., Ltd.
B-4: polyvinyl alcohol short fiber, product name "Kuralon 1239," manufactured by KURARAY CO., LTD.
B-5: xanthan gum, product name "Rhodopol 23," manufactured by Rhodia
B-6: guar gum, product name "Emmulcoll 200 SP," manufactured by Degussa
B-7: β-cyclodextrin, product name "Celdex B-100," manufactured by Nihon Shokuhin Kako Co., Ltd.
C-1: molecular sieve, product name "MS4A Powder," manufactured by UNION SHOWA K.K.
C-2: porous cellulose particles, product name "Viscopearl-mini (particle size: 700 μm)," manufactured by Rengo Co., Ltd.
C-3: porous natural glass, product name "Pumice LHM-90," manufactured by Hess
C-4: porous nylon particles, product name "Nylon 6 porous fine particles (mean particle size: 13 μm)," manufactured by Toray Industries, Inc.

Details of used components *1) to *7) shown in Tables 3 and 4 are as follows.

*1) ZEOSIL 1165MP, manufactured by Rhodia
*2) DIABLACK N339, manufactured by Mitsubishi Chemical Corporation
*3) Si75, manufactured by Evonik
*4) Process Oil T-DAE, manufactured by ENEOS Corporation
*5) Ozonone 6C, manufactured by Seiko Chemical Co., Ltd.
*6) Nocceler CZ, manufactured by Ouchi Shinko Chemical Industrial Co., Ltd.
*7) Nocceler D, manufactured by Ouchi Shinko Chemical Industrial Co., Ltd.

In Tables 3 and 4, parenthesized numerical values correspond to the amounts (parts by mass) of components used for preparation of polymer compositions. The symbol "-" refers to the case where the corresponding compound was not used.

As shown in Tables 3 and 4, the polymer composition containing the polymer (A) (i.e., conjugated diene-based polymer having a percent hydrogenation of 75% or more) and the water-soluble component (B) (Examples 1 to 19) achieved an improvement in balance between wear resistance and on-ice grip performance, as compared with the cases of Comparative Examples 1 to 4. Vulcanized rubber produced from each of the polymer compositions of Examples 1 to 19 exhibited a reduction in increase of hardness caused by thermal aging. Thus, the rubber compositions of Examples 1 to 19 each containing the polymer (A) and the water-soluble component (B) were found to produce vulcanized rubber achieving favorable on-ice grip performance, excellent wear resistance, and a reduction in increase of hardness caused by thermal aging. Incorporation of the porous particles (C) caused a further improvement in on-ice grip performance of vulcanized rubber.

The aforementioned experiments have revealed that a polymer composition containing the polymer (A) and the water-soluble component (B) can achieve high on-ice grip performance and an improvement in wear resistance. The results also indicate that the polymer composition containing the polymer (A) and the water-soluble component (B) can achieve a reduction in increase of hardness caused by thermal aging.

## Claims

**1.** A polymer composition comprising:

(A) a conjugated diene-based polymer having a carbon-carbon unsaturated bond and exhibiting a value θ of 0.75 or more as determined by formula (i):

$$\theta = (p + (0.5 \times r))/(p + q + (0.5 \times r) + s) \qquad \text{formula (i):}$$

wherein p, q, r, and s are respectively the proportions by mole of structural units represented by formulae (1), (2), (3), and (4) in the polymer:

[F1]

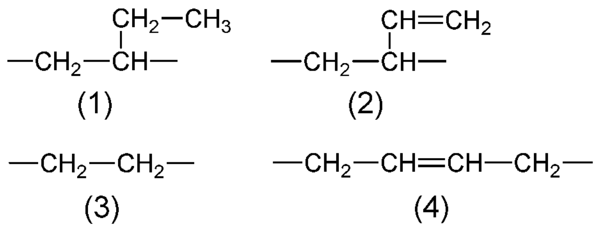

(1) (2) (3) (4) ;

and

(B) at least one component selected from the group consisting of water-soluble particles and water-soluble fiber.

**2.** The polymer composition according to claim 1, wherein the conjugated diene-based polymer (A) has at least one functional group selected from the group consisting of an amino group, a nitrogen-containing heterocyclic group, a phosphino group, a hydroxyl group, a thiol group, and a hydrocarbyloxysilyl group.

**3.** The polymer composition according to claim 1 or 2, wherein the conjugated diene-based polymer (A) has a partial structure derived from at least one compound selected from the group consisting of compounds represented by formula (5) and compounds represented by formula (6):

[F2]

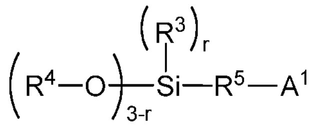

(5)

(wherein $A^1$ represents a monovalent functional group which has at least one atom selected from the group consisting of nitrogen, phosphorus, oxygen, sulfur, and silicon, which does not have active hydrogen, and which is bonded to $R^5$ via a nitrogen atom, a phosphorus atom, an oxygen atom, a sulfur atom, a silicon atom, or a carbon atom contained in a carbonyl group, or a (thio)epoxy group; $R^3$ and $R^4$ each independently represent a hydrocarbyl group; $R^5$ represents a hydrocarbylene group; r is an integer of 0 to 2; when r is 2, a plurality of groups $R^3$ are identical to or different from each other; and when r is 0 or 1, a plurality of groups $R^4$ are identical to or different from one another); and

[F3]

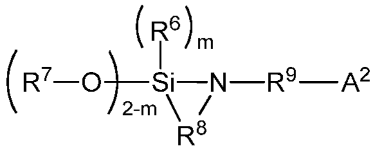

(6)

(wherein $A^2$ represents a monovalent functional group which has at least one atom selected from the group consisting of nitrogen, phosphorus, oxygen, sulfur, and silicon, which does not have active hydrogen, and which is bonded to $R^9$ via a nitrogen atom, a phosphorus atom, an oxygen atom, a sulfur atom, or a silicon atom, or a C1 to C20 hydrocarbyl group; $R^6$ and $R^7$ each independently represent a hydrocarbyl group; $R^8$ represents a hydrocarbylene group; $R^9$ represents a single bond or a hydrocarbylene group; m is 0 or 1; and when m is 0, a plurality of groups $R^7$ are identical to or different from each other).

**4.** The polymer composition according to any one of claims 1 to 3, wherein the conjugated diene-based polymer (A) has a glass transition temperature of -40°C or lower.

**5.** The polymer composition according to any one of claims 1 to 4, wherein the conjugated diene-based polymer (A) has a weight average molecular weight (Mw) (in terms of polystyrene) of $1.0 \times 10^5$ to $2.0 \times 10^6$ as measured through gel

permeation chromatography.

6. The polymer composition according to any one of claims 1 to 5, wherein the amount of the component (B) is 0.1 to 40 parts by mass relative to 100 parts by mass of the conjugated diene-based polymer (A).

7. The polymer composition according to any one of claims 1 to 6, wherein the polymer composition further comprises porous particles.

8. The polymer composition according to any one of claims 1 to 7, wherein the polymer composition further comprises a crosslinking agent.

9. The polymer composition according to any one of claims 1 to 8, wherein the polymer composition further comprises at least one species selected from the group consisting of silica and carbon black.

10. A crosslinked product obtained by employing a polymer composition as recited in any one of claims 1 to 9.

11. A tire comprising a tread and a sidewall, wherein either or both of the tread and the sidewall are formed from a polymer composition as recited in any one of claims 1 to 9.

## Patentansprüche

1. Polymerzusammensetzung, umfassend:

   (A) ein Polymer auf Basis eines konjugierten Diens mit einer ungesättigten Kohlenstoff-Kohlenstoff-Bindung und einem Wert $\theta$ von 0,75 oder mehr, bestimmt durch die Formel (i):

   $$\text{Formel (i): } \theta = (p + (0{,}5 \times r))/(p + q + (0{,}5 \times r) + s)$$

   wobei p, q, r und s jeweils die Molanteile der durch die Formeln (1), (2), (3) und (4) dargestellten Struktureinheiten in dem Polymer sind:

   [F1]

   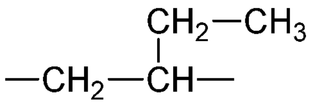

   (1)

   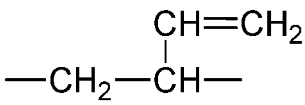

   (2)

   $-CH_2-CH_2-$

   (3)

   $-CH_2-CH=CH-CH_2-$

   (4)

   ;

   und

   (B) zumindest ein Bestandteil, ausgewählt aus der Gruppe, bestehend aus wasserlöslichen Teilchen und wasserlöslichen Fasern.

2. Polymerzusammensetzung nach Anspruch 1, wobei das Polymer auf Basis eines konjugierten Diens (A) zumindest eine funktionelle Gruppe aufweist, die aus der Gruppe ausgewählt ist, die aus einer Aminogruppe, einer stickstoffhaltigen heterocyclischen Gruppe, einer Phosphinogruppe, einer Hydroxylgruppe, einer Thiolgruppe und einer Kohlenwasserstoffoxysilylgruppe besteht.

3. Polymerzusammensetzung nach Anspruch 1 oder 2, wobei das Polymer auf Basis eines konjugierten Diens (A) eine Teilstruktur aufweist, die von mindestens einer Verbindung abgeleitet ist, die aus der Gruppe ausgewählt ist, die aus Verbindungen, die durch die Formel (5) dargestellt sind, und Verbindungen, die durch die Formel (6) dargestellt sind,

besteht:

[F2]

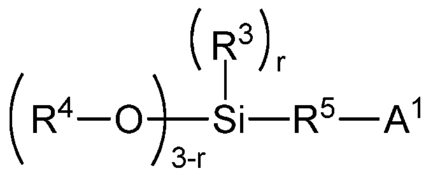

(5)

(wobei $A^1$ eine einwertige funktionelle Gruppe darstellt, die zumindest ein Atom aufweist, das aus der Gruppe ausgewählt ist, die aus Stickstoff, Phosphor, Sauerstoff, Schwefel und Silicium besteht, die keinen aktiven Wasserstoff aufweist und die über ein Stickstoffatom, ein Phosphoratom, ein Sauerstoffatom, ein Schwefelatom, ein Siliciumatom oder ein Kohlenstoffatom, das in einer Carbonylgruppe enthalten ist, an $R^5$ gebunden ist oder eine (Thio)epoxygruppe; $R^3$ und $R^4$ jeweils unabhängig voneinander eine Kohlenwasserstoffgruppe darstellen; $R^5$ eine Hydrocarbylengruppe (Kohlenwasserstoffgruppe) darstellt; r eine ganze Zahl von 0 bis 2 ist; wenn r gleich 2 ist, sind mehrere Gruppen $R^3$ identisch oder voneinander verschieden; und wenn r gleich 0 oder 1 ist, sind mehrere Gruppen $R^4$ identisch oder voneinander verschieden); und

[F3]

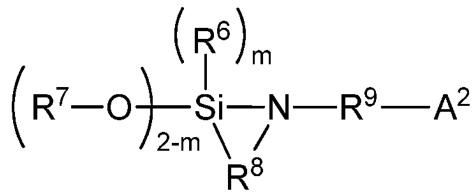

(6)

(wobei $A^2$ eine einwertige funktionelle Gruppe darstellt, die zumindest ein Atom aufweist, das aus der Gruppe ausgewählt ist, die aus Stickstoff, Phosphor, Sauerstoff, Schwefel und Silicium besteht, die keinen aktiven Wasserstoff aufweist und die über ein Stickstoffatom, ein Phosphoratom, ein Sauerstoffatom, ein Schwefelatom oder ein Siliciumatom an $R^9$ gebunden ist, oder eine C1- bis C20-Kohlenwasserstoffgruppe; $R^6$ und $R^7$ jeweils unabhängig voneinander eine Kohlenwasserstoffgruppe darstellen; $R^8$ eine Hydrocarbylengruppe (Kohlenwasserstoffgruppe) darstellt; $R^9$ eine Einfachbindung oder eine Hydrocarbylengruppe (Kohlenwasserstoffgruppe) darstellt; m gleich 0 oder 1 ist; und wenn m gleich 0 ist, sind mehrere Gruppen $R^7$ identisch oder voneinander verschieden).

**4.** Polymerzusammensetzung nach einem der Ansprüche 1 bis 3, wobei das Polymer auf Basis eines konjugierten Diens (A) eine Glasübergangstemperatur von -40 °C oder weniger aufweist.

**5.** Polymerzusammensetzung nach einem der Ansprüche 1 bis 4, wobei das Polymer auf Basis eines konjugierten Diens (A) eine gewichtsmittlere Molmasse (Mw) (bezogen auf Polystyrol) von $1,0 \times 10^5$ bis $2,0 \times 10^6$, gemessen durch Gelpermeationschromatographie, aufweist.

**6.** Polymerzusammensetzung nach einem der Ansprüche 1 bis 5, wobei die Menge des Bestandteils (B) 0,1 bis 40 Masseteile, bezogen auf 100 Masseteile des Polymer auf Basis eines konjugierten Diens (A), beträgt.

**7.** Polymerzusammensetzung nach einem der Ansprüche 1 bis 6, wobei die Polymerzusammensetzung ferner poröse Teilchen umfasst.

**8.** Polymerzusammensetzung nach einem der Ansprüche 1 bis 7, wobei die Polymerzusammensetzung ferner ein Vernetzungsmittel umfasst.

**9.** Polymerzusammensetzung nach einem der Ansprüche 1 bis 8, wobei die Polymerzusammensetzung ferner zumindest eine Spezies umfasst, die aus der Gruppe ausgewählt ist, die aus Siliciumoxid und Kohleschwarz besteht.

**10.** Vernetztes Produkt, erhalten unter Verwendung einer Polymerzusammensetzung nach einem der Ansprüche 1 bis 9.

**11.** Reifen, umfassend eine Lauffläche und eine Seitenwand, wobei entweder die Lauffläche oder die Seitenwand oder beide aus einer Polymerzusammensetzung nach einem der Ansprüche 1 bis 9 gebildet sind.

## Revendications

**1.** Composition polymère comprenant :

(A) un polymère à base de diène conjugué ayant une liaison insaturée carbone-carbone et présentant une valeur θ de 0,75 ou plus, telle que déterminée par la formule (i) :

$$\text{formule (i)} : \theta = (p + (0{,}5 \times r))/(p + q + (0{,}5 \times r) + s)$$

dans laquelle p, q, r et s sont respectivement les proportions en moles des unités structurales représentées par les formules (1), (2), (3) et (4) dans le polymère :

[F1]

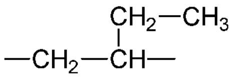
(1)

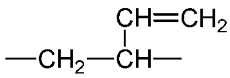
(2)

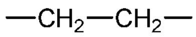
(3)

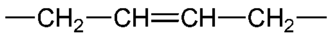
(4)

;

et

(B) au moins un composant choisi dans le groupe constitué par des particules solubles dans l'eau et des fibres solubles dans l'eau.

**2.** Composition polymère selon la revendication 1, dans laquelle le polymère à base de diène conjugué (A) a au moins un groupe fonctionnel choisi dans le groupe constitué par un groupe amino, un groupe hétérocyclique azoté, un groupe phosphino, un groupe hydroxyle, un groupe thiol et un groupe hydrocarbyloxysilyle.

**3.** Composition polymère selon la revendication 1 ou 2, dans laquelle le polymère à base de diène conjugué (A) a une structure partielle dérivée d'au moins un composé choisi dans le groupe constitué par des composés représentés par la formule (5) et des composés représentés par la formule (6) :

[F2]

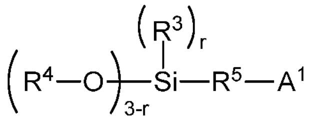
(5)

(dans laquelle $A^1$ représente un groupe fonctionnel monovalent qui a au moins un atome choisi dans le groupe constitué par l'azote, le phosphore, l'oxygène, le soufre et le silicium, qui ne contient pas d'hydrogène actif, et qui est lié à $R^5$ par l'intermédiaire d'un atome d'azote, d'un atome de phosphore, d'un atome d'oxygène, d'un atome de soufre, d'un atome de silicium ou d'un atome de carbone contenu dans un groupe carbonyle ou un groupe (thio) époxy ; $R^3$ et $R^4$ représentent chacun indépendamment un groupe hydrocarbyle ; $R^5$ représente un groupe hydrocarbylène ; r est un nombre entier de 0 à 2 ; lorsque r est égal à 2, une pluralité de groupes $R^3$ sont identiques ou différents les uns des autres ; et lorsque r est égal à 0 ou 1, une pluralité de groupes $R^4$ sont identiques ou différents les uns des autres) ; et

[F3]

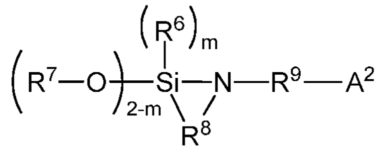 (6)

(dans laquelle $A^2$ représente un groupe fonctionnel monovalent qui a au moins un atome choisi dans le groupe constitué par l'azote, le phosphore, l'oxygène, le soufre et le silicium, qui ne contient pas d'hydrogène actif, et qui est lié à $R^9$ par l'intermédiaire d'un atome d'azote, d'un atome de phosphore, d'un atome d'oxygène, d'un atome de soufre ou d'un atome de silicium, ou un groupe hydrocarbyle en C1 à C20 ; $R^6$ et $R^7$ représentent chacun indépendamment un groupe hydrocarbyle ; $R^8$ représente un groupe hydrocarbylène ; $R^9$ représente une liaison simple ou un groupe hydrocarbylène ; m est égal à 0 ou 1 ; et lorsque m est égal à 0, une pluralité de groupes $R^7$ sont identiques ou différents les uns des autres).

**4.** Composition polymère selon l'une quelconque des revendications 1 à 3, dans laquelle le polymère à base de diène conjugué (A) a une température de transition vitreuse de -40 °C ou moins.

**5.** Composition polymère selon l'une quelconque des revendications 1 à 4, dans laquelle le polymère à base de diène conjugué (A) a un poids moléculaire moyen en poids (Mw) (en termes de polystyrène) de $1{,}0 \times 10^5$ à $2{,}0 \times 10^6$, tel que mesuré par chromatographie par perméation de gel.

**6.** Composition polymère selon l'une quelconque des revendications 1 à 5, dans laquelle la quantité du composant (B) est de 0,1 à 40 parties en masse pour 100 parties en masse du polymère à base de diène conjugué (A).

**7.** Composition polymère selon l'une quelconque des revendications 1 à 6, dans laquelle la composition polymère comprend en outre des particules poreuses.

**8.** Composition polymère selon l'une quelconque des revendications 1 à 7, dans laquelle la composition polymère comprend en outre un agent de réticulation.

**9.** Composition polymère selon l'une quelconque des revendications 1 à 8, dans laquelle la composition polymère comprend en outre au moins une espèce choisie dans le groupe constitué par la silice et le noir de carbone.

**10.** Produit réticulé obtenu en utilisant une composition polymère telle que décrite dans l'une quelconque des revendications 1 à 9.

**11.** Pneumatique comprenant une bande de roulement et un flanc, dans lequel la bande de roulement et/ou le flanc sont formés à partir d'une composition polymère telle que décrite dans l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010514867 W
- JP 63004841 B
- JP H0137970 B